Europäisches Patentamt

European Patent Office

Office européen des brevets

(11) Publication number: **0 434 865 A1**

# EUROPEAN PATENT APPLICATION

(21) Application number: **89124161.4**

(22) Date of filing: **29.12.89**

(51) Int. Cl.5: **G06F 9/44**

(43) Date of publication of application:
**03.07.91 Bulletin 91/27**

(84) Designated Contracting States:
**DE GB**

(71) Applicant: **Hughes Aircraft Company**
**7200 Hughes Terrace P.O. Box 45066**
**Los Angeles, California 90045-0066(US)**

(72) Inventor: **Wade, Fred B.**
**6102 Richfield Road**
**Yorba Linda California(US)**

(74) Representative: **Witte, Alexander, Dr.-Ing.**
**Augustenstrasse 7**
**W-7000 Stuttgart 1(DE)**

(54) **System for automatic generation of message parser.**

(57) A code generating system utilizes automatic compiler generators (109, 113), known as "compiler-compilers" to automatically generate message parser code for a message processing system (200). A format of an incoming message is treated as if it were the syntax of a computer language. The problem of decoding such a message is then equivalent to the problem of decoding a statement expressed in higher order computer source code typically handled by a conventional compiler.

Fig-1

## SYSTEM FOR AUTOMATIC GENERATION OF MESSAGE PARSER

### BACKGROUND OF THE INVENTION

The invention relates to automatic computer code generation for the implementation of programs for parsing input messages to a computerized message processing system.

Computerized incoming message processing systems are known wherein each message must be "parsed" or separated into its component parts in a manner which will enable the programs to interpret the grammatical form, function and interrelation of each part of the message. Conventionally, message parsing programs are implemented by providing programmers with the legal message formats and syntax rules for a given message set and then manually coding the parsing procedures.

Various problems are associated with using manual coding methods for programming such message parsers. The chief difficulty in developing code for the message decomposition is that a formatted message does not have a rigid, unvarying definition. For example, lines may be missing or of different lengths, and fields may be absent. Additionally, the parsing program must be able to consider all conditions which could occur in a formatted message from the message set. Under this condition, a major problem is checking the parser routine for consistency and completeness. Portions of a manually generated parser may never be executed, and it is difficult to test and debug such a parser program. Hence the parsing routine may be placed into operation before many "bugs" or errors appear during its use. Another problem with prior art approaches is the difficulty in determining the impact of changes to the parser program when a new or variant format is added to the message set. Finally, coding is labor-intensive and requires highly trained programmers.

### SUMMARY OF THE INVENTION

The above problems can be minimized by using automatic programming techniques to generate message parsing programming code. The format of a message to be processed is treated as the syntax of a high-order computer language. The problem of decoding a message is then equivalent to the problem of decoding a higher order source code.

Accordingly, a system for automatically generating computer program code for use in parsing messages having a known specification of allowable message formats and key words comprises a lexical analyzer generator for generating a lexical analyzer program source code in a predetermined high level computer code language, key word examining means for passing a list of the key words along with the action to be taken when each key word is recognized to the lexical analyzer generator. The source code of the lexical analyzer is passed to a first compiler means for the predetermined high level computer code language resulting in generation of an object code implementation of a lexical analyzer for the messages to be parsed. Production means generates a set of generation rule productions which defines the allowable formats of the messages to be parsed in accordance with the known specification, and the set of productions is passed to a compiler means for generating a compiler program for a high level computer code language. The compiler generator program is used to generate a syntax analyzer program source code in the predetermined computer code language and the syntax analyzer source code is passed to a second compiler means for the predetermined computer code language to generate an object code implementation of a syntax analyzer for the messages to be parsed. In this manner, the object code for both lexical analysis and syntactical analysis is in essence automatically generated thereby by-passing problems with the prior art in manually generating such parsing program code.

By utilizing a system which converts the message format specification into an executable program, the message format specification is automatically checked for consistency and completeness. New or variant message formats can be added easily and the changes are automatically checked to see if they interfere with the previously working formats. After the new specification is prepared, a new parser can be generated in a manner of minutes with little manual effort.

### BRIEF DESCRIPTION OF THE DRAWING

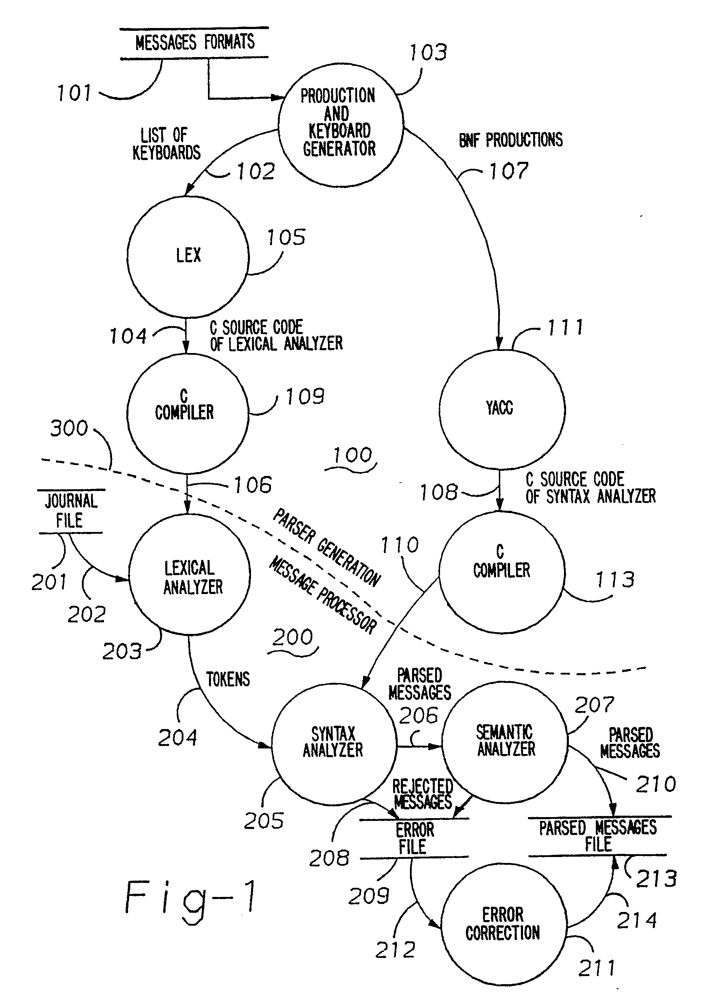

The objects and features of the invention will become apparent from a reading of a detailed description taken in conjunction with the drawing in which FIG. 1 is a message processing data flow diagram arranged in accordance with the principles of the invention.

### DETAILED DESCRIPTION

Computerized message processing systems basically automate the tasks performed in the past by human intervention at a message receiving terminal. The message processing system receives a message, splits it into its component parts and places its pertinent contents into an updated data base and perhaps displays all or a portion of the message, etc.

As explained above, this invention contemplates a system for automatically generating the requisite computer program code for use in decoding automatically a message input to the message processing system by breaking it down into its component parts and processing these parts with suitable programmed routines for updating the system's database and displaying information dictated by the nature of the incoming message.

The invention is directed to automatically generating the computer code necessary for parsing or breaking down into a predetermined structure, the basic parts of the incoming message for computerized analysis. The specifics of the computerized analysis is not relevant to the invention. The analysis is a process that takes place after the parsing using the techniques of the invention for automatically generating the parsing program is accomplished.

It has been found that by treating the allowable formats of the messages as the syntax of a computer language, known programs for automatically generating compilers and lexical analyzers in the context of higher order computer language codes can be utilized for automatically generating the code required for parsing the messages input to the message processing system.

As is well known in the computer system programming art, any "compiler" takes as its input a character string, performs "lexical analysis" on that character string to generate a string of basic parts or "tokens", parses the tokens to generate typically a tree-form structure which then is operated upon by a code generation routine to produce assembly code corresponding to the character string input to the system. The assembly code is then passed through a conventional assembler to generate an object code implementation of the routine specified by the input character string. In this invention, the same tasks typically undertaken by a conventional compiler are performed on input messages which are treated as if they were a higher order computer code being operated upon by a compiler. One description of the conceptual nature and further details of the compilation process in computer systems is given in Robert M. Graham, Principles of Systems Programming, John Wiley & Sons, Inc. (1975).

The system of the invention is best explained with reference to the message processing data flow diagram of FIG. 1. The message format specification at 101 is taken either by a human programmer or by an automatic program routine which examines the key words and the specification of the message formats at 103 and passes at 102 a list of key words to a commercially available lexical analyzer generator computer program at 105. One such lexical analyzer generator is known as LEX which is described in N.E. Lesk "LEX-A Lexical Analyzer Generator", Computer Science Technical Report No. 39, Bell Laboratories, Murray Hill, New Jersey. The LEX generator accepts a specification for strings of characters to be recognized and actions to be performed when each string is found. The generator then produces a program written in C which performs the specified actions. Because the program is written in C, it can be easily moved to other processors when necessary.

The lexical analyzer C source code at 104 is then passed to a conventional C compiler at 109 which in turn produces an object code implementation of the lexical analyzer at 106 for lexical analyzer 203 of message processor 200. Lexical analyzer 203 is used in message processor 200 to recognize key words, time stamps, and field delimiters. The analyzer also strips out blank lines. Using such a string preprocessor prior to syntax analysis results in a more efficient implementation of the message processor system.

The next step in parser generation section 100 of FIG. 1 is for the production and key word generator 103 to convert the message format specification into a set of syntax-defining generation rules called "productions". In the preferred embodiment, the productions at 107 are in so-called Backus-Naur Form (BNF), a well-known notation for expressing such productions. BNF productions are described in the above cited Principles of Systems Programming by Robert M. Graham.

The BNF productions at 107 are then passed to a commercially available compiler generator routine also known as a "Compiler-Compiler". In this embodiment the compiler generator 111 comprises YACC (Yet Another Compiler-Compiler) which is described in S.C. Johnson, "YACC: Yet Another Compiler-Compiler", Computer Science Technical Report No. 32, 1975, Bell Laboratories, Murray Hill, New Jersey 07974. YACC accepts a specification expressed in BNF productions and generates a C program which either parses or rejects a message. YACC 111 then generates a syntax analyzer source code in C language at 108 which is passed to a conventional C compiler 113 for generation at 110 of the object code implementation of syntax analyzer 205.

The message specification input to YACC can be checked by machine for completeness and consistency. The steps of generating and checking the message specification from the message format would have to be performed even if YACC were not used. However, using YACC will reveal design errors early on in development of the parser code. Once the specification is complete, YACC will generate the parser with no further human intervention.

FIG. 1 also depicts the data flow through the message processor portion 200. Typically, an input/output routine would place message characters in a journal file 201 as they are received. Input messages are sent one character at a time over path 202 to lexical analyzer 203 where the characters are grouped into "tokens" for passage at 204 to syntax analyzer 205. If characters cannot be recognized, they will not be grouped, but will be sent as single character tokens for passage at 204 to syntax analyzer 205. If the message syntax is determined to be incorrect, the parsed message is sent at 208 to an error file 209 where the parsed message becomes a candidate for message correction by being passed at 212 to conventional error correction routines 211. If the message syntax is correct, the parsed message is sent at 206 to a conventional semantic analyzer 207 whereupon parsed messages at 210 are sent to a parsed message file 213. The semantic analyzer 207 examines various fields for errors such as invalid parameters in various key word locations. The semantic analyzer 207 reformats items into a standard for further processing. If those messages which were rejected for errors were able to be automatically corrected at error correction routine 211, the corrected message is then passed in parsed format at 214 to the parsed message file 213.

The invention has been described with reference to a description of a preferred embodiment, the details of which have been given for the sake of example only.

Many alternative embodiments would likewise fall within the scope of this invention. For example, other higher level computer languages could be employed, such as FORTRAN, ADA and PASCAL, provided a suitable lexical analyzer generator and a compiler-compiler, each arranged to generate source code in the chosen alternative higher order computer language are employed in place of LEX 105 and YACC 111, respectively, of FIG. 1.

Yet another alternative arrangement falling within the scope and spirit of this invention would be to treat the format rules of messages to be processed as the syntax of a computer assembly language. Under this approach, one could select a suitable assembly language-based lexical analyzer generator in place of LEX 105, a conventional assembler in place of compiler 109, an assembly language-based syntax analyzer generator in place of YACC 111, and a conventional assembler in place of compiler 113.

The invention is to be interpreted in accordance with the spirit and scope of the appended claims.

## Claims

1. A system for automatically generating computer program code for use in parsing messages having a known specification of allowable formats and key words, the system including
- a lexical analyzer generator (105) conventionally used with key words of a predetermined computer programming language for generating a lexical analyzer program source code (104) in the predetermined language,
- a first object code converter for use with the predetermined language,
- a syntax analyzer source code generator conveniently used for generating a conversion program expressed in the predetermined language, and
- a second object code converter for use with the predetermined language,
characterized by:
- key word examining means (103) for passing a list of the key words (102) along with the action to be taken when each key word is recognized to the lexical analyzer generator (105);
- the first object code converter operative to receive the source code (104) from the lexical analyzer generator (105) and to generate an object code implementation (106) of a lexical analyzer (103) for use in analyzing the messages to be parsed;
- production means (103) for generating a set of generation rule productions (107) defining allowable formats of the messages to be parsed in accordance with the known specifications;
- the syntax analyzer source code generator operative to receive the set of productions (107) and to generate a syntax analyzer program source code (108) expressed in the predetermined language; and
- the second object code converter operative to receive the syntax analyzer program source code (108) and to generate (110) an object code implementation of a syntax analyzer (105) for use in analyzing the messages to be parsed.

2. The system of claim 1, characterized in that the predetermined computer programming language comprises assembly language and the first and second object code converters each comprise an assembler for the predetermined assembly language.

3. The system of claim 1 or 2, characterized in that the predetermined computer language comprises a high-level language and the first and second object code converters each comprise a compiler (109, 113) for the predetermined high-level language.

4. A system for automatically generating computer program code for use in parsing messages having a know specification of allowable formats and key words, including

- a lexical analyzer generator (105) for generating a lexical analyzer program source code (104) in a predetermined high-level computer code language, characterized by:

- key word examining means (103) for passing a list of the key words (102) along with the action to be taken when each key work is recognized to the lexical analyzer generator (105);

- first compiler means (109) for receiving the source code (104) from the lexical analyzer generator (105) and for generating an object code implementation (106) of a lexical analyzer (103) for use in analyzing the messages to be parsed;

- production means (103) for generating a set of generation rule productions (107) defining allowable formats of the messages to be parsed in accordance with the known specification;

- compiler generator means (111) for receiving the set of productions (107) and for generating a syntax analyzer program source code (108) in the predetermined computer code language; and

- second compiler means (109) for receiving the syntax analyzer program source code (104) and generating an object code implementation (106) of a syntax analyzer (203) for use in analyzing the messages to be parsed.

5. The system of any of claims 1 through 4, characterized by:

- journal file means (201) containing messages to be parsed and operative to pass (202) message characters as input to the object code implementation of the lexical analyzer (230);

the lexical analyzer (203) operative to generate message tokens (204) and to pass the tokens to the object code implementation of a syntax analyzer (205) for generation of a parsed message (206, 208).

6. The system of any of claims 1 through 5, characterized in that the predetermined computer language is C.

7. The system of any of claims 1 through 6, characterized in that the lexical analyzer generator (105) comprises LEX.

8. The system of any of claims 1 through 7, characterized in that the generation rule productions (106) are expressed in Backus-Naur form (BNF).

9. The system of any of claims 3 through 8, characterized in that the compiler generator (111) comprises YACC.

Fig-1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | BELL SYSTEM TECHNICAL JOURNAL, vol. 57, no. 6, part 2, July-August 1978, pages 2155-2175, American Telephone and Telegraph Co., US; S.C. JOHNSON et al.: "UNIX time-sharing system: Language development tools" * Page 2157, lines 9-31; page 2158, lines 7-8; page 2167, figure 2; page 2167, lines 12-20 * | 1,3-9 | G 06 F 9/44 |
| Y | IDEM | 2 | |
| Y | J.-M. RIFFLET: "La Programmation sous UNIX", 1986, page 169, McGraw-Hill, Paris, FR * Page 169 * | 2 | |
| | | | TECHNICAL FIELDS SEARCHED (Int. Cl.5) |
| | | | G 06 F |

The present search report has been drawn up for all claims

| Place of search | Date of completion of the search | Examiner |
|---|---|---|
| THE HAGUE | 03-07-1990 | GRASLAND B.Y.R. |

EPO FORM 1503 03.82 (P0491)